# EUROPEAN PATENT SPECIFICATION

(11) **EP 3 810 406 B1**
(45) Date of publication and mention of the grant of the patent: **23.11.2022**
(21) Application number: 19729099.2
(22) Date of filing: 27.05.2019
(51) Int. Cl.: B29C 64/386, B29C 64/393

(54) **THREE-DIMENSIONAL FABRICATION APPARATUS AND THREE-DIMENSIONAL FABRICATION PROCESS**
VORRICHTUNG ZUR DREIDIMENSIONALEN HERSTELLUNG UND HERSTELLUNGSVERFAHREN ZUR DREIDIMENSIONALEN HERSTELLUNG
APPAREIL DE FABRICATION TRIDIMENSIONNELLE ET PROCÉDÉ DE FABRICATION TRIDIMENSIONNELLE

(30) Priority: 22.06.2018 JP 2018118660
(43) Date of publication of application: 28.04.2021
(73) Proprietor: Ricoh Company, Ltd., Tokyo 143-8555 (JP)
(72) Inventor: YAMAMOTO, Norihiro, Tokyo 143-8555 (JP)
(74) Representative: SSM Sandmair
(86) International application number: PCT/JP2019/020930
(87) International publication number: WO 2019/244568

(56) References cited:
- WO-A1-2017/157455
- US-A1- 2016 129 633
- US-A1- 2017 014 903

## Description

### Technical Field

Aspects of the present disclosure relate to a three-dimensional fabrication apparatus and a method to fabricate a three-dimensional object.

### Background Art

A fabrication apparatus (so-called "3D printer") that fabricates a three-dimensional object based on input data has been developed. Various methods have been proposed to perform a three-dimensional fabrication, for example, a fused filament fabrication (FFF, a hot-melt filament manufacturing method), a selective laser sintering (SLS, a powder-sintering lamination fabrication method), a material jetting (MJ), an electron beam melting (EBM), and a stereolithography apparatus (SLA).

However, there is a case in which a desired three-dimensional object cannot be fabricated, and it is necessary to correct a fabrication process.

As a technique to correct the fabrication process, PTL 1 discloses a technique that detects a calibration marker formed prior to form a three-dimensional object to measure an image distortion. According to PTL 1, the fabrication process is corrected based on the image distortion so that a fabrication accuracy of a three-dimensional object can be improved.

However, the PTL 1 does not consider the influence of shrinkage caused by temperature drop after fabrication of a three-dimensional object. Thus, there is still a case in which a desired three-dimensional object cannot be fabricated.

### Citation List

### Patent Literature

PTL 1: Japanese Unexamined Patent Application Publication No. 2016-215641

US 2017/0014903 A1 discloses an information processing apparatus for fabricating a desired three-dimensional fabricated object by suppressing shrinkage of a fabricated object caused by a temperature drop in a laminated portion at a fabricating time of the three-dimensional fabricated object. This information processing apparatus includes an acquirer that acquires laminating and fabricating data of a three-dimensional fabricating model, and a data generator that generates laminating and fabricating data of a three-dimensional fabricating model added, when a width in a predetermined direction on a laminating surface of a fabricated object is equal to or larger than a threshold, with a shrinkage suppression structure model for suppressing shrinkage after laminating and fabricating, in the predetermined direction. The shrinkage suppression structure model is a plate-like structure model extending in the predetermined direction and having a length which can suppress shrinkage after laminating and fabricating. → page 1a

WO 2017/157455 A1 discloses a method which includes analysing, using at least one processor, object model data representing at least a portion of an object to be generated by an additive manufacturing apparatus by fusing a build material to determine at least one predicted object generation temperature. The method may further include identifying, using at least one processor and from said analysing, a feature of the at least a portion of the object associated with a predicted object generation temperature which is below a fusing temperature of build material to be used in object generation. The method may further include determining, using at least one processor, modification data to be used in object generation, the modification data being to increase a temperature of the feature in object generation.

US 2016/0129633 A1 discloses a 3D printing apparatus and a 3D printing method which form a 3D object by forming and stacking a plurality of forming layers. The 3D printing apparatus includes a body, a printing module, a curing module, a sensing module and a controlling module. The body has a stage. The printing module sprays liquid forming material on the stage. The curing module cures the liquid forming material on the stage to form a forming layer. The sensing module is configured corresponding to the stage and detects a surface profile of the forming layer according to a condition parameter to generate a profile signal. The controlling module is electrically connected to the printing module, sensing module and curing module. The controlling module receives the profile signal and drives the printing module and the curing module according to the profile signal to remedy the surface profile of the forming layer.

### Summary of Invention

### Technical Problem

An object of the present disclosure is to solve the problems in the above-described conventional technique, that is, to provide a fabrication apparatus and a method to fabricate a desired three-dimensional model

### Solution to Problem

The invention is defined by the appended independent claims.

### [Advantageous Effects of Invention]

As described above, according to the present disclosure, a fabrication apparatus and a method to fabricate a desired three-dimensional object are provided.

### [Brief Description of Drawings]

[Fig. 1]

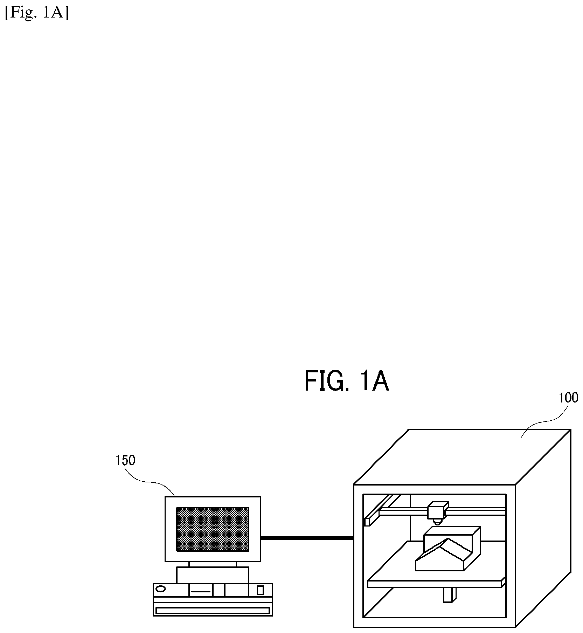

   Figs. 1A to 1C illustrate a schematic configuration of entire of a three-dimensional fabrication system according to an embodiment of the present disclosure;
[Fig. 2]

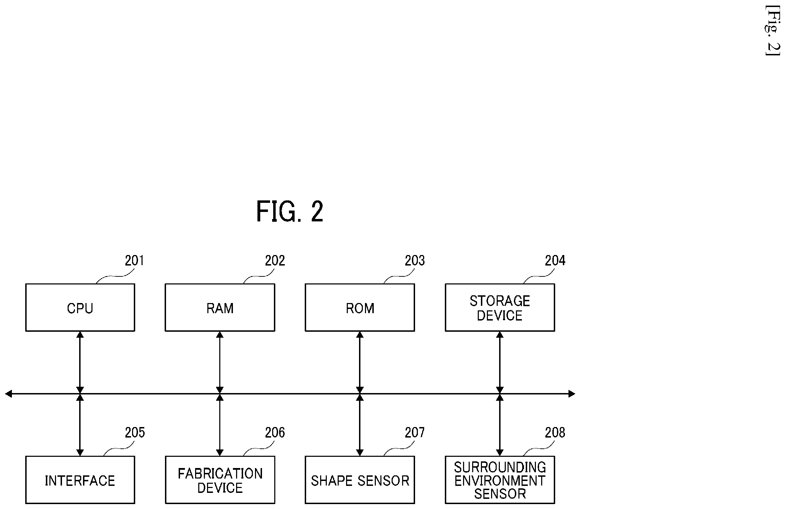

   Fig. 2 illustrates a hardware configuration included in the fabrication apparatus according to the present embodiment;
[Fig. 3]

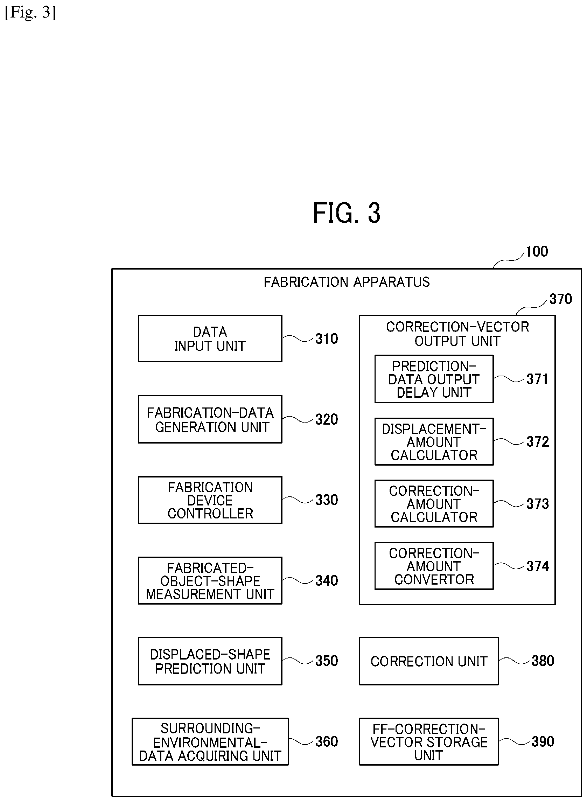

   Fig. 3 is a block diagram of a software included in the fabrication apparatus according to the present embodiment;
[Fig. 4]

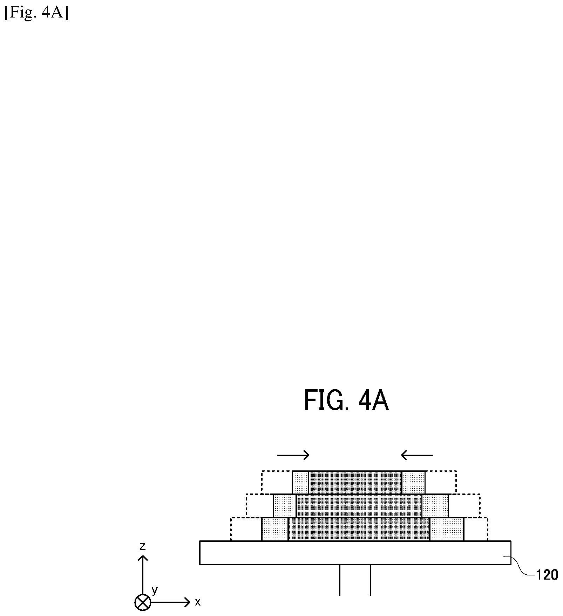

   Figs. 4A to 4C illustrates an example in which the shape of the three-dimensional object is deformed with an elapsed time;
[Fig. 5]

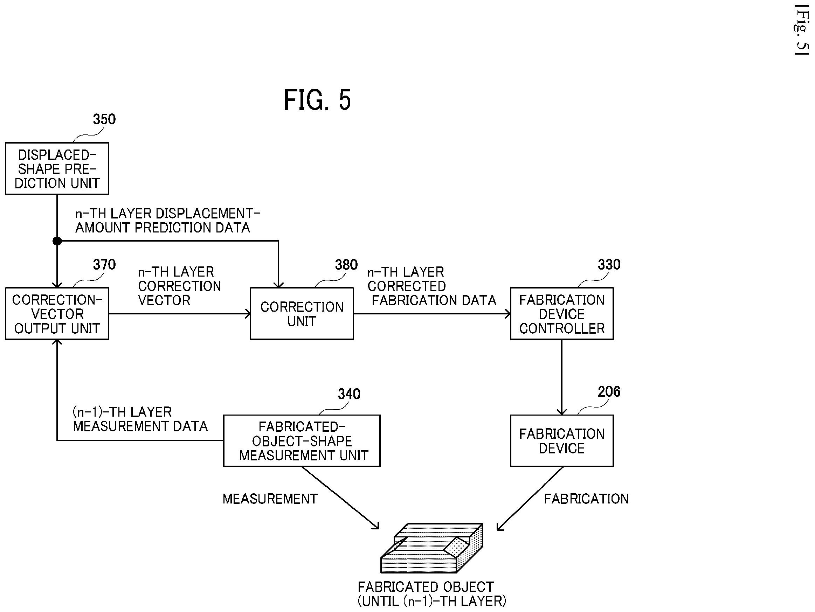

   Fig. 5 illustrates a data flow in the present embodiment;
[Fig. 6]

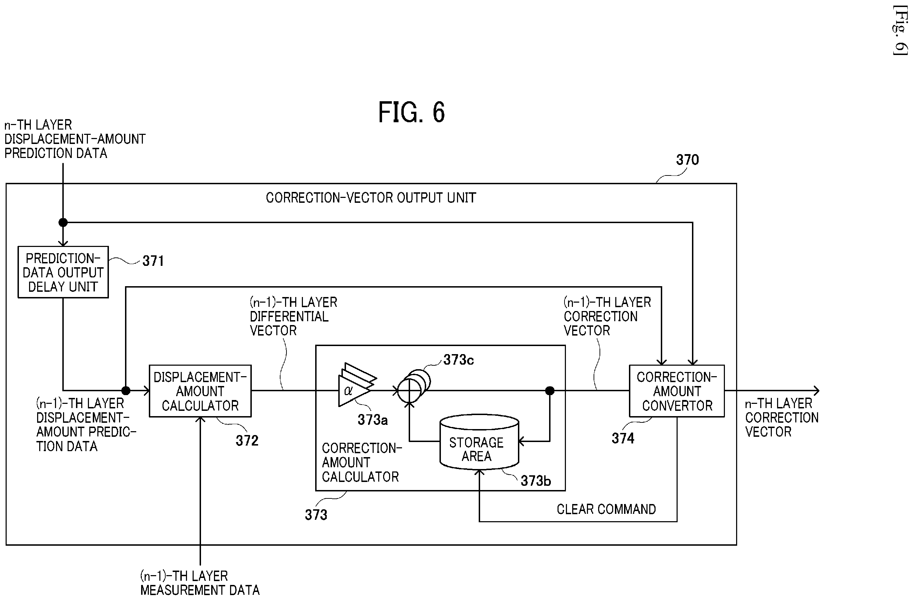

   Fig. 6 illustrates a detailed data flow of the correction-vector output unit in the present embodiment;
[Fig. 7]

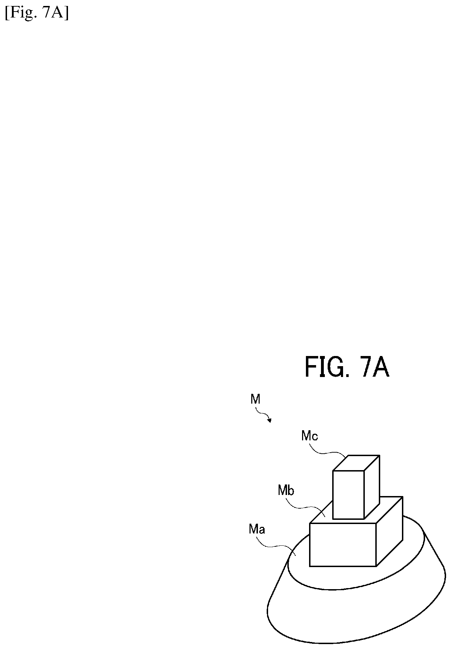

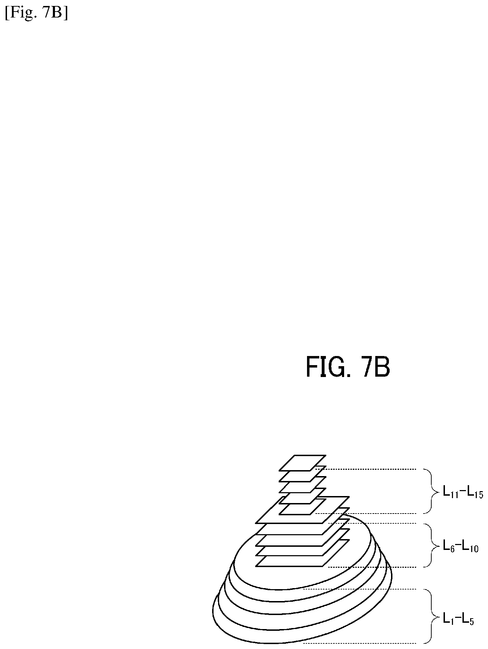

   Figs. 7A and 7B illustrate an example of a three-dimensional object to be fabricated by the fabrication apparatus according to the present embodiment;
[Fig. 8]

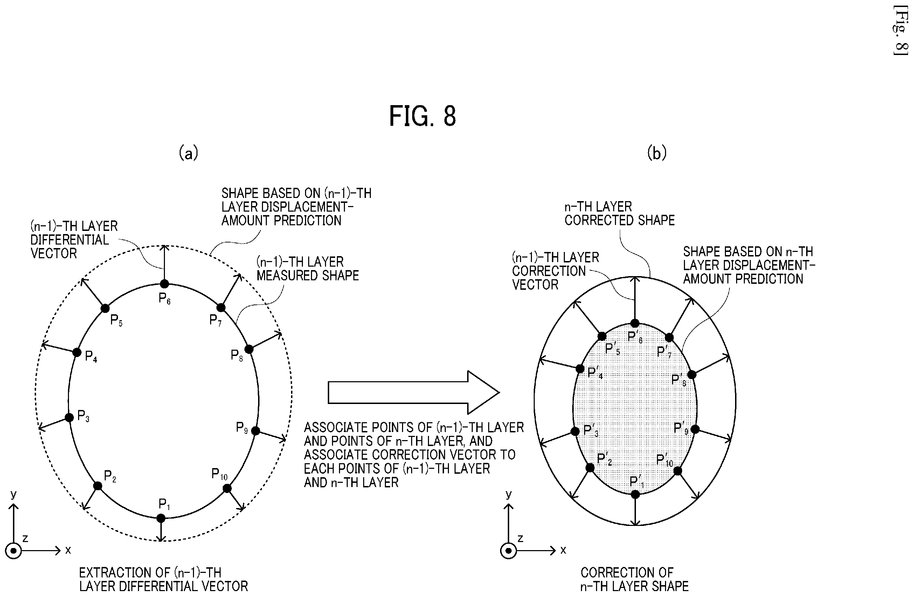

   Fig. 8 illustrates a correction process in the present embodiment;
[Fig. 9]

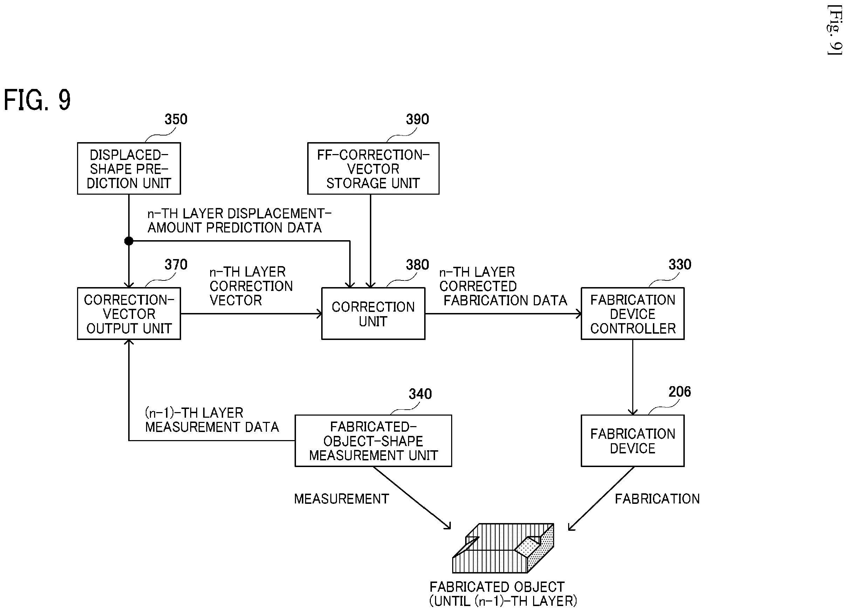

   Fig. 9 illustrates a data flow in another embodiment of the present embodiment; and
[Fig. 10]

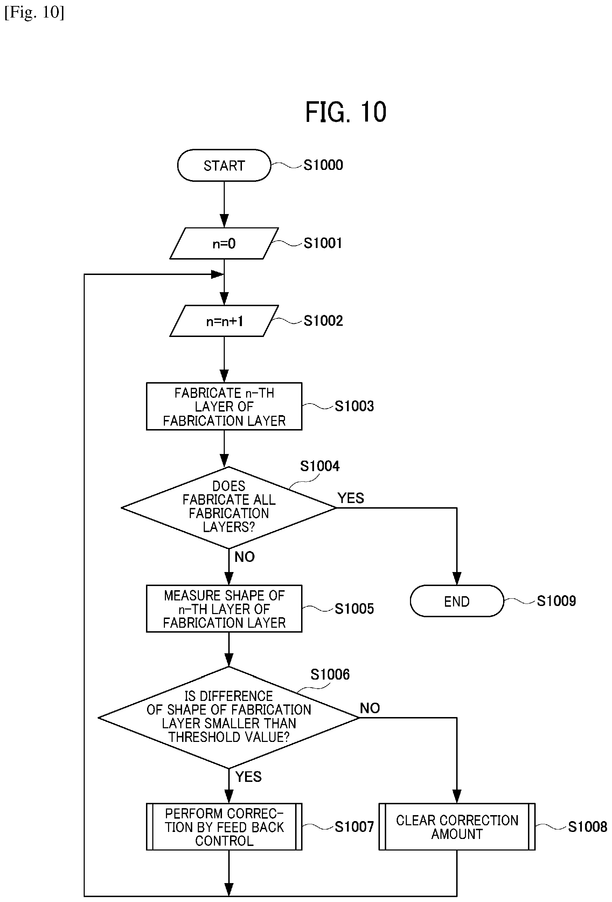

   Fig. 10 is a flowchart of the processes executed by the fabrication apparatus.

### [Description of Embodiments]

Embodiments according to the present embodiment are described below. However, the present embodiment is not intended to be limited to the embodiments described herein. In the drawings referred to below, the same reference numerals are used for the common elements, and the description of which are omitted as appropriate. Further, in the following description, although the present embodiment is mainly described for a fabrication apparatus using a Fused Filament Fabrication (FFF) method. However, the embodiment is not limited to the fabrication apparatus using the FFF method.

Further, in the following description, a height direction of a three-dimensional object is referred to as a z-axis direction, and a plane orthogonal to the z-axis direction is referred to as a xy plane for convenience of explanation.

Fig. 1A illustrates a schematic configuration of entire of a three-dimensional fabrication system according to an embodiment of the present disclosure. As illustrated in Fig. 1A, the three-dimensional fabrication system includes a fabrication apparatus 100 to fabricate a three-dimensional object. For example, an information processing terminal 150 transmits shape data of a three-dimensional object to the fabrication apparatus 100. The fabrication apparatus 100 fabricates the three-dimensional object based on the shape data. Further, the information processing terminal 150 may operate as a controller that controls a process executed by the fabrication apparatus 100. A function of the information processing terminal 150 may be incorporated in the fabrication apparatus 100.

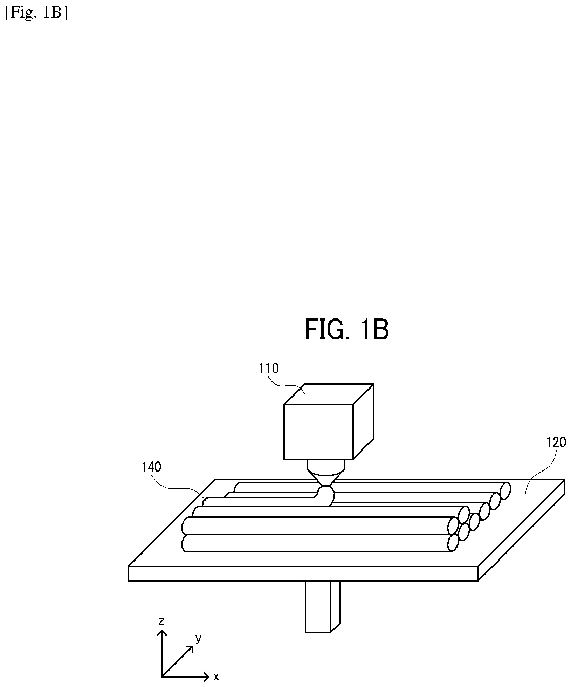

As illustrated in Fig. 1B, fabrication material 140 is discharged onto a stage 120 from a head 110 movable in parallel to the xy plane, and a fabrication layer is fabricated on the xy plane. A one-dimensional line is drawn in the same plane so that one layer of a fabrication layer of the three-dimensional object is fabricated. When a first layer of the fabrication layer is fabricated, the stage 120 is lowered by the height (lamination pitch) of one layer in the direction along the z-axis. Then, the head 110 is driven in the same manner as in the first layer to form a second layer of the fabrication layer. The fabrication apparatus 100 repeats the above described operations to laminate a fabrication layer to fabricate a three-dimensional object. Although a configuration in which the head 110 moves in the xy plane and the stage 120 moves in the z-axis direction is described above as an example, the configuration described above does not limit the present embodiment, and other configurations may adopt to the present embodiment.

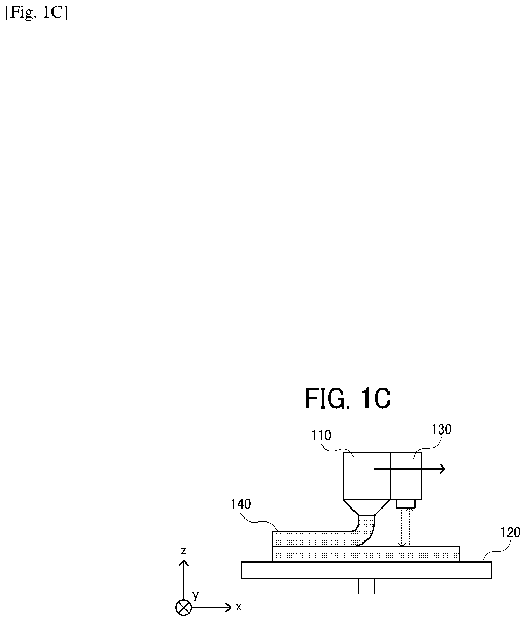

Further, the fabrication apparatus 100 according to the present embodiment includes a sensor 130 to measure a shape of the fabrication layer during fabrication or the three-dimensional object after fabrication. The sensor 130 may measure the xy plane of the fabrication layer. As illustrated in Fig. 1C, the sensor 130 may measure the shape of the fabrication layer in conjunction with a fabrication operation by the head 110 during fabrication, for example, in a preferred embodiment. Further, the measurement of the three-dimensional object may be performed each time one layer of the fabrication layer is formed. Further, timing and a range of performing the measurement of the three-dimensional object may be arbitrarily selected and are not particularly limited.

Next, a hardware configuration of the fabrication apparatus 100 is described below. Fig. 2 is a circuit diagram illustrating a hardware configuration included in the fabrication apparatus 100 of the present embodiment. The fabrication apparatus 100 includes a central processing unit (CPU) 201, a random-access memory (RAM) 202, a read only memory (ROM) 203, a storage device 204, an interface 205, a fabrication device 206, a shape sensor 207, and a surrounding environment sensor 208. Each hardware is connected via a bus.

The CPU 201 is a device that executes a program that controls an operation of the fabrication apparatus 100 and performs predetermined processing. The RAM 202 is a volatile storage device to provide an execution space of a program executed by the CPU 201, and is used to store and expand programs and data. The ROM 203 is a non-volatile storage device, and stores programs and firmware, etc., executed by the CPU 201.

The storage device 204 is a readable and writable non-volatile storage device that stores an OS, various applications, setting information, various data, and the like that cause the fabrication apparatus 100 to function. The interface 205 is device to connect the fabrication apparatus 100 to another apparatus. The interface 205 can be connected to, for example, the information processing terminal 150, a network, an external storage device, etc., and can receive control data of a fabrication operation and a shape data of a three-dimensional object, etc., via the interface 205.

The fabrication device 206 is an apparatus to fabricate a fabrication layer based on fabrication data as a fabrication unit. The fabrication device 206 includes the head 110, the stage 120, and the like, and is configured in accordance with a fabrication method. For example, the fabrication device 206 in a fused filament fabrication (FFF) method includes a heating mechanism to melt a fabrication material 140 and a nozzle to discharge the fabrication material 140, for example. The fabrication device 206 in a selective laser sintering (SLS) method includes a laser light source and the like.

The shape sensor 207 is a device that measures the shape of the fabrication layer during fabrication and may measure the shape of the three-dimensional object after fabrication. The shape sensor 207 measures the xy plane of the fabrication layer. Further, the shape sensor 207 may measure sizes of the three-dimensional object in the x-axis, y-axis and z-axis directions. Examples of the shape sensor 207 include an infrared sensor, a camera, and a three-dimensional measurement sensor (for example, a light-cutting profile sensor).

The surrounding environment sensor 208 is a device to measure environment data around the fabrication apparatus 100. Examples of the surrounding environment sensor 208 include a temperature sensor, a humidity sensor, and the like.

Next, functional units executed by each hardware in the present embodiment is escribed with reference to Fig. 3. Fig. 3 is a block diagram of a software included in the fabrication apparatus 100 according to the present embodiment.

The fabrication apparatus 100 may include a data input unit 310, a fabrication-data generation unit 320, a fabrication device controller 330, a fabricated-object-shape measurement unit 340, a displaced-shape prediction unit 350, a surrounding-environmental-data acquiring unit 360, a correction-vector output unit 370, a correction unit 380, and a feed forward (FF)-correction-vector storage unit 390.

The data input unit 310 receives input such as shape data to form a three-dimensional object. The shape data is created by the information processing terminal 150 or the like as an example, and is input to the data input unit 310 via the interface 205.

The fabrication-data generation unit 320 divides the shape data input to the data input unit 310 in a height direction of the three-dimensional object and generates fabrication data (so-called slice data) of a plurality of fabrication layers. The three-dimensional object to be fabricated is divided into units of lamination pitch, and the fabrication data is generated as data indicating the shape of the fabrication layer to form each layer to be laminated. The fabrication data may be binary data indicating whether the fabrication process is executed or not in an xy plane coordinates of each layer. In a preferred embodiment, the fabrication data may include not only data of whether fabrication is executed at each coordinate but also include the data of a fabrication amount at each coordinate and a discharge amount of the fabrication material 140 and the like as parameters. In Fig. 3, the fabrication-data generation unit 320 is included in the fabrication apparatus 100. However, the fabrication-data generation unit 320 may be included in the information processing terminal 150. In this case, the fabrication data generated by the information processing terminal 150 is transmitted to the fabrication apparatus 100, and the fabrication process is executed.

The fabrication device controller 330 controls an operation of fabrication of the fabrication device 206 based on the fabrication data. The fabrication device controller 330 adjusts a position of the head 110 and a height of the stage 120 based on the fabrication data so that the fabrication device controller 330 can fabricate while controlling various parameters such as a speed of fabrication and the lamination pitch, and an algorithm. Further, the fabrication device controller 330 can control the fabrication amount based on the fabrication data. For example, the discharge amount of the fabrication material 140 can be controlled in the FFF method, and an intensity of the laser can be controlled in the SLS method. The fabrication device controller 330 may control the fabrication device 206 based on the fabrication data output from the fabrication-data generation unit 320. The fabrication device controller 330 may control the fabrication device 206 based on the fabrication data (corrected fabrication data) in which a fabrication shape is corrected by the correction unit 380.

The fabricated-object-shape measurement unit 340 controls the shape sensor 207 as a measurement unit, and measures measurement data such as dimensions and height as a shape of the fabrication layer during fabrication and may measure the three-dimensional fabrication object after fabrication. The fabricated-object-shape measurement unit 340 acquires the result of the measurement as the measurement data.

The displaced-shape prediction unit 350 predicts a displacement amount of the shape of the fabrication layer after a predetermined time has elapsed since fabrication. The displaced-shape prediction unit 350 obtains the displacement amount of the shape of the fabrication layer predicted from the fabrication data based on physical properties of the fabrication material and the ambient temperature. Further, the displaced-shape prediction unit 350 can also obtain temporal change of the displacement amount of the shape by simulation, and can output characteristics between the displacement amount and the time (displacement amount-time characteristics). The displacement-amount prediction data predicted by the displaced-shape prediction unit 350 is output to the correction-vector output unit 370.

Further, the displacement-amount prediction data improves prediction accuracy of the displacement amount by performing dummy fabrication before fabricating a three-dimensional object. Repeating the dummy fabrication a plurality of times can further improve the prediction accuracy of the displacement amount. Further, the fabrication apparatus 100 may be configured to obtain the displacement-amount prediction data to be output in advance, and store the data in various storages, and then output the data appropriately.

The surrounding-environmental-data acquiring unit 360 controls the surrounding environment sensor 208 and acquire environment data such as temperature and humidity around the fabrication apparatus 100. The acquired surrounding environment data is output to the displaced-shape prediction unit 350, and is used as a simulation parameter to predict the displacement amount.

The correction-vector output unit 370 outputs, as a calculator, a correction vector of an upper layer calculated based on the measurement data of the lower layer and the displacement-amount prediction data. The correction-vector output unit 370 includes a prediction-data output delay unit 371 and a displacement-amount calculator 372. The prediction-data output delay unit 371 outputs displacement-amount prediction data of one layer below of the fabrication layer. The displacement-amount calculator 372 compares measurement data with displacement amount prediction data to calculate a differential vector. Further, the correction-vector output unit 370 includes a correction-amount calculator 373 and a correction-amount convertor 374. The correction-amount calculator 373 calculates a correction vector based on the differential vector. The correction-amount convertor 374 outputs the correction vector in association with the displacement-amount prediction data of the next layer. The details of each functional block included in the correction-vector output unit 370 are described below.

The correction unit 380 corrects the fabrication data based on the correction vector so that the shape of the fabrication layer after contraction becomes a desired shape. Thereby, accuracy of the shape of the fabrication layer after contraction can be improved.

The FF-correction-vector storage unit 390 stores a correction vector calculated in advance by simulation or dummy fabrication. For example, when the shape between layers of each fabrication layer changes sharply, it may not be able to correct the fabrication data appropriately by feedback control. In such a case, the correction vector stored in the FF-correction-vector storage unit 390 is used to correct the fabrication data by feed-forward control to appropriately correct the fabrication data according to the shape of the three-dimensional object so that a desired three-dimensional object can be fabricated.

Thus, the three-dimensional object with high accuracy can be fabricated by each functional unit as described above. The above-described software block corresponds to the functional units to be implemented by executing the program according to the present embodiment and functioning the respective hardware by the CPU 201. All of the functional parts described in each embodiment may be realized entirely by software, or a unit or the entire of the functional units may be implemented as hardware providing equivalent functions.

A shape change of the three-dimensional object due to passage of time is described below with reference to Figs. 4A to 4C. Figs. 4A to 4C are views illustrating an example in which the shape of the three-dimensional object is deformed with an elapsed time.

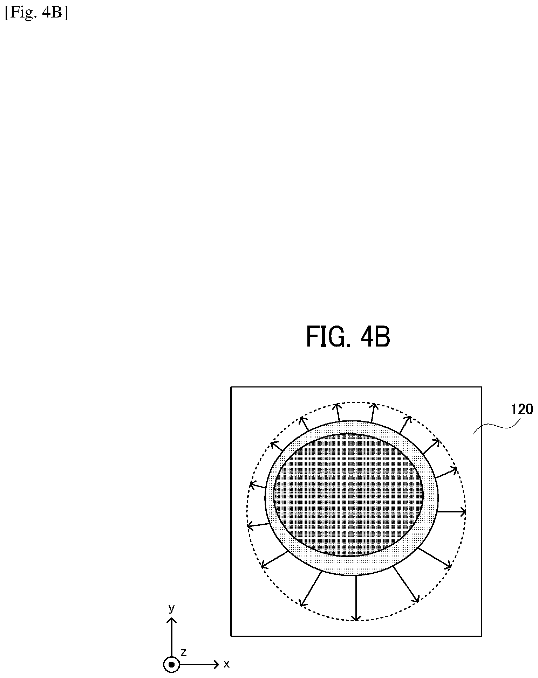

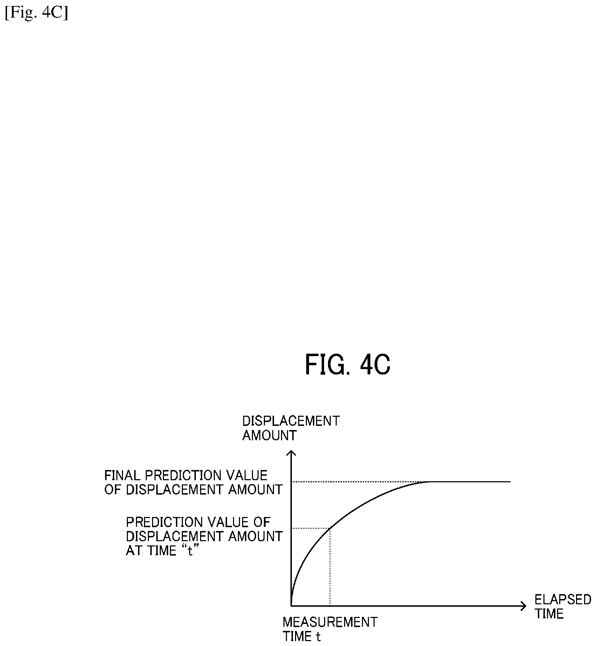

Fig. 4A is a side view illustrating a process of contraction as the temperature of the three-dimensional object fabricated onto the stage 120 decreases. In the shape of the three-dimensional object, the fabrication layer contracts by temperature decrease of the fabrication layer with the elapsed time after fabrication. In Fig. 4, the shape of the three-dimensional object just after fabrication is indicated by a broken line. The shape of the three-dimensional object during contraction is illustrated by a light color. The shape of the (final) three-dimensional object after contraction is illustrated in a dark color.

Fig. 4B is a top view corresponding to Fig. 4A. The arrow in Fig. 4B indicates a differential vector that is a difference between the shape of the three-dimensional object just after fabrication and the shape of the three-dimensional object during contraction. Thus, the arrow in Fig. 4B indicates a displacement amount of an outer shape of the three-dimensional object. Generally, the shape of the three-dimensional object just after the fabrication matches the shape of the fabrication data input to the fabrication device controller 330. The shape of the three-dimensional object during or after contraction can be measured by the fabricated-object-shape measurement unit 340.

As illustrated in Fig. 4B, the fabrication layer may unevenly contract rather than contract uniformly within the layer. In addition, it takes time to settle the contraction of the fabrication layer and stabilize the shape of the fabrication layer. Thus, the displaced-shape prediction unit 350 outputs displacement-amount prediction data obtained by simulating the displacement amount characteristics illustrated in Fig. 4C based on the fabrication data of each fabrication layer and the surrounding environmental conditions. The horizontal axis in Fig. 4C indicates the elapsed time after fabrication, and the vertical axis indicates the predicted value of the displacement amount from the shape just after fabrication. The displacement-amount prediction data includes data predicting the displacement amount until the contraction due to the temperature decrease is saturated.

The present embodiment compares measurement data of the shape of the three-dimensional object measured at time when a predetermined time has elapsed after fabrication (referred to as measurement time "t"), and the displacement-amount prediction data of the three-dimensional object during contraction at the time "t" derived from the displacement-amount prediction data to calculate a differential vector. Since the fabrication data of the next layer can be appropriately corrected without waiting for the shape of the three-dimensional object to be stabilized, the accuracy of fabrication of the three-dimensional object can be efficiently improved.

The correction process according to the present embodiment is described below. Fig. 5 is a circuit diagram illustrating a data flow in the present embodiment. As illustrated in Fig. 5, a case is considered in which a three-dimensional object is fabricated until (n - 1)-th layer. At the time of fabrication of (n - 1)-th layer of the three-dimensional object, the fabricated-object-shape measurement unit 340 measures the shape of the (n - 1)-th xy plane. The fabricated-object-shape measurement unit 340 outputs the measured data to the correction-vector output unit 370 as the (n - 1)-th layer measurement data.

The displaced-shape prediction unit 350 acquires the fabrication data of each layer generated by the fabrication-data generation unit 320, and simulates the shape when the three-dimensional object is fabricated according to the fabrication data to predict a displacement amount-time characteristic. The simulation is executed based on various fabrication conditions such as temperature, humidity, and physical properties of the fabrication material 140. The simulation result is output to the correction-vector output unit 370 and the correction unit 380 as displacement-amount prediction data for each layer.

The correction-vector output unit 370 compares the displacement-amount prediction data with the measurement data of a planer shape, calculates correction vector data, and outputs the correction vector data to the correction unit 380. The correction unit 380 generates corrected fabrication data to control the operation of the fabrication device 206 based on the displacement-amount prediction data and the correction vector, and outputs the corrected fabrication data to the fabrication device controller 330. The fabrication device controller 330 controls the operation of the fabrication device 206 based on the corrected fabrication data to fabricate a three-dimensional object of a desired shape.

The processes in the above-described correction-vector output unit 370 are described below with reference to Figs. 6 to 8. Fig. 6 illustrates a detailed data flow of the correction-vector output unit 370 in the present embodiment. As illustrated in Fig. 6, the correction-vector output unit 370 includes a prediction-data output delay unit 371, a displacement-amount calculator 372, a correction-amount calculator 373, and a correction-amount convertor 374.

Figs. 7A and 7B are perspective views of an example of a three-dimensional object to be formed by the fabrication apparatus 100 according to the present embodiment. In the present embodiment, an example of correction executed during fabrication of a three-dimensional object having a shape illustrated in Figs. 7A and 7B is described. Fig. 7A illustrates the shape of a desired three-dimensional object (hereinafter, referred to as "model M") fabricated by the fabrication apparatus 100. As an example, the model M of the present embodiment includes a lower model Mₐ having a frustum shape, a center model M_{b} having a rectangular parallelepiped shape, and an upper model M_{c}. Data indicating the shape of the model M is input to the data input unit 310 of the fabrication apparatus 100, and the fabrication-data generation unit 320 generates slice data obtained by dividing the model M in the height direction in units of lamination pitches.

Fig. 7B illustrates the shape of each layer of slice data obtained by dividing the model M. In the model M of the present embodiment, as illustrated in Fig. 7B, each of the lower model Mₐ, the center model M_{b}, and the upper model M_{c} is divided into five layers, and the slice data of each layer is assumed to be generated as slice data of L₁ to L₁₅. An example of the correction process executed during fabrication of the model M in Fig. 7 is described below.

Fig. 8 illustrates a correction process in the present embodiment. Part (a) of Fig. 8 illustrates an example in which the fabrication layer of the (n - 1)-th layer is measured to obtain a differential vector. Further, part (b) of Fig. 8 illustrates an example of correction of the shape of the n-th layer. The correction process is described below with reference to Figs. 6 to 8 as appropriate.

As illustrated in Fig. 6, the n-th layer displacement-amount prediction data output from the displaced-shape prediction unit 350 is input to the prediction-data output delay unit 371. The prediction-data output delay unit 371 temporarily stores displacement-amount prediction data of each layer input from the displaced-shape prediction unit 350 and outputs to the displacement-amount calculator 372 at a predetermined timing. In addition, the (n - 1)-th layer measurement data output from the fabricated-object-shape measurement unit 340 is input to the displacement-amount calculator 372.

The displacement-amount calculator 372 calculates a (n - 1)-th layer differential vector indicating an error of a prediction value based on a (n - 1)-th layer displacement-amount prediction data and the (n - 1)-th layer measurement data. Since it is necessary to compare the same layer to calculate the differential vector, the prediction-data output delay unit 371 delays the displacement-amount prediction data by one layer and outputs the displacement-amount prediction data to the displacement-amount calculator 372. As a result, in the displacement-amount calculator 372, a number of the fabrication layers to be compared can be made identical so that the differential vector can be appropriately calculated.

Further, the shape of the fabricated three-dimensional object contracts with the temperature decrease, and the measurement of the shape may be performed in the process of contraction of the three-dimensional object. Therefore, the displacement-amount calculator 372 extracts the displacement amount at the time corresponding to the measurement time "t" from the input displacement-amount prediction data, and sets the displacement amount as a comparison target. As described above, the displace amount corresponding to the measurement time "t" is used to enable an appropriate correction, and the fabrication accuracy of the three-dimensional object can be efficiently improved.

Part (a) of Fig. 8 illustrates an example in which the displacement-amount calculator 372 compares the shape based on the (n - 1)-th layer displacement-amount prediction data with the (n - 1)-th layer measurement data to extract a (n - 1)-th differential vector. A solid line in part (a) of Fig. 8 indicates a contour shape of the fabrication layer at the measurement time "t". Further, a broken line in part (a) of Fig. 8 indicates a contour shape of the fabrication layer at the time corresponding to the measurement time "t" calculated based on the displacement-amount prediction data as illustrated in Fig. 4C. Arrows in part (a) of Fig. 8 indicate differential vectors, and the differential vectors can be obtained as described below.

First, the displacement-amount calculator 372 extracts points that constitutes the contour shape of the measured fabrication layer and points that constitutes the contour shape based on the displacement-amount prediction data. Then, each point is obtained that constitutes the contour shape based on the displacement-amount prediction data corresponding to each point that constitutes the contour shape of the fabrication layer. Then, a difference between position vectors is obtained for each of the corresponding points obtained as described-above to calculate the differential vector. As an example of a method of obtaining corresponding points for each contour shape, an alignment algorithm of point group data such as an iterative closest point (ICP) can be used, but it is not particularly limited.

Further, it is not necessary to use all of the extracted points in calculation of the differential vector to reduce an amount of calculation. For example, a part of the extracted points may be used to complement the shape between the points, and as illustrated in part (a) of Fig. 8, differential vectors may be calculated for points P₁ to P₁₀ constituting the contour shape.

The displacement-amount calculator 372 outputs the (n - 1)-th layer differential vector calculated as described-above to the correction-amount calculator 373. As illustrated in Fig. 7, the correction-amount calculator 373 includes a multiplier 373a, a storage area 373b, and an adder 373c. The multiplier 373a multiplies the differential vector by a constant coefficient "α". The storage area 373b is a memory to store the correction amount at time of previous correction, that is, at the time of the (n - 2)-th layer correction. The correction amount before the (n - 2)-th layer may be accumulated in the storage area 373b. The adder 373c adds an output value of the multiplier 373a related to the (n - 1)-th layer and the (n - 2)-th layer correction amount to output a (n - 1)-th layer correction vector.

Note that although each of the arithmetic device constituting the correction-amount calculator 373 may be configured in series, the above-described arithmetic operations may be configured in parallel as illustrated in Fig. 7 since the each of the above-described arithmetic process is performed a number of times corresponding to the number of differential vectors. Further, in the configuration illustrated in Fig. 7, the correction vector is calculated by integral control. However, the present embodiment is not particularly limited to the integral control. For example, the correction vector may be calculated by other control methods such as a proportional-integral-differential (PID) control, a proportional-integral (PI) control, etc.

The n-th layer displacement-amount prediction data output from the displaced-shape prediction unit 350, the (n - 1)-th layer displacement-amount prediction data output from the prediction-data output delay unit 371, and the (n - 1)-th layer correction vector output from the correction-amount calculator 373 are input to the correction-amount convertor 374. The correction-amount convertor 374 determines whether to correct the n-th layer based on the above-mentioned various data input to the correction-amount convertor 374. When the correction-amount convertor 374 corrects the n-th layer, the correction-amount convertor 374 converts the (n - 1)-th layer correction vector to a correction vector corresponding to the shape data of the n-th layer and outputs the n-th layer correction vector to the correction unit 380. The correction-amount convertor 374 obtains the n-th layer correction vector as described below.

First, the correction-amount convertor 374 compares the shape based on the (n - 1)-th layer displacement-amount prediction data with the shape based on the n-th layer displacement-amount prediction data, and associates points constituting each shape. Association of each point can be performed by the iterative closest point (ICP) method or the like as in the process executed by the displacement-amount calculator 372. The points corresponding to the points P₁ to P₁₀ are extracted as the points P'₁ to P'₁₀ as illustrated in part (b) of Fig. 8. Part (b) of Fig. 8 illustrates an example of correction of the shape of the n-th layer. In part (b) of Fig. 8, an area indicated by dark color is a shape based on the n-th layer displacement-amount prediction data, and an area indicated by the solid line is a corrected shape of the n-th layer.

The correction-amount convertor 374 converts the (n - 1)-th layer correction vector into the n-th layer correction vector based on the prediction value of the displacement amount at "t". The correction unit 380 outputs shape data in which the n-th layer correction vector is associated with the final prediction value of the displacement-amount (shape after contraction) in the n-th layer prediction shape as the n-th layer corrected fabrication data.

The correction process using feedback control as described-above is effective when the shape of the (n - 1)-th layer is the same as or similar to the shape of the n-th layer. For example, the correction process using feedback control is effective when the shape changes gradually as illustrated by L₁ to L₅ in Fig. 7B, or when the fabrication layers of identical shape are laminated such as L₆ to L₁₀ or L₁₁ to L₁₅. Conversely, when the shape changes remarkably between the layers such as between L₅ and L₆, for example, the correction process may not be properly performed. That is, it is highly probable that a shrinkage process of the fabrication layers from L₁ to L₅ in which the shape of each layer is circle and a shrinkage process of the fabrication layer of L₆ having a rectangular shape are different. Thus, the correction process may not be properly performed even if the fabrication layer after L₆ is corrected using the data accumulated in fabrication layers from L₁ to L₅, so that a desired three-dimensional object may not be obtained. Therefore, preferably, the correction-amount convertor 374 compares the shape of the (n - 1)-th layer with the shape of the n-th layer, and selects whether to perform the above-described correction process based on magnitude of the difference between the shapes of layers.

Specifically, the correction-amount convertor 374 compares the shape based on the input n-th layer displacement-amount prediction data with the shape based on the (n - 1)-th layer displacement-amount prediction data. When a distance between corresponding points in each layer is smaller than a predetermined threshold value as a result of comparison, the n-th layer correction vector is output based on the (n - 1)-th layer correction vector. Conversely, when the distance between corresponding points in each layer is larger than the threshold value, the correction amount accumulated up to the (n - 1)-th layer is not reflected to the correction of the n-th layer, and the correction vector is output as zero. Further, when the distance between corresponding points in each layer is larger than the threshold value, the correction-amount convertor 374 may be configured to output a clear command to the correction-amount calculator 373. The storage area 373b that has received the clear command clears the correction amount accumulated up to the (n - 1)-th layer. Thus, when an amount of the shape change between the layers is large, the correction can be performed without using the correction vector of the previous fabrication layer, so that the fabrication layer can be appropriately corrected.

Further, even when the amount of the shape change between the layers is large, the n-th layer correction vector may be output based on the (n - 1)-th layer correction vector if the shapes of the figures are similar. For example, since each of the fabrication layers of L₁₀ and L₁₁ is rectangular and the shapes are similar, it is highly probable that the correction vector of the fabrication layer up to L₁₀ can be applied to the fabrication layer of L₁₁.

Therefore, the correction-amount convertor 374 compares the shape of the (n - 1)-th layer with the shape of the n-th layer to calculate a correlation value between the shape of the (n - 1)-th layer and the shape of the n-th layer. If the correlation value of the shape is larger than the threshold value, the n-th layer correction vector is output based on the (n - 1)-th layer correction vector. Conversely, when the correlation value of the shape is smaller than the threshold value, the correction amount accumulated up to the (n - 1)-th layer is not reflected to the correction of the n-th layer, and the correction vector is output as zero. Further, when the correlation value of the shape is smaller than the threshold value, the correction-amount convertor 374 may be configured to output a clear command to the correction-amount calculator 373 and clear the correction amount up to the (n - 1)-th layer accumulated in the storage area 373b. Thus, even if the amount of the shape change between the layers is large, the fabrication layer can be appropriately corrected based on the correlation of the shape of each layer.

Further, when the change in the shape between the layers is remarkable as described-above, the correction may be performed without using the feedback control as illustrated in Fig. 6. For example, the fabrication apparatus 100 in another preferred embodiment may perform correction by feed forward control. As illustrated in Fig. 9, the fabrication apparatus 100 may include the FF-correction-vector storage unit 390 configured to be able to output an FF correction vector to the correction unit 380.

Fig. 9 illustrates a data flow in another embodiment. The FF correction vector is a vector having a characteristic of "G⁻¹" when a transfer characteristic in normal feedback control is referred to as "G", and the FF correction vector can be obtained previously by simulation, dummy fabrication, or the like.

The FF-correction-vector storage unit 390 outputs the FF correction vector to the correction unit 380 when the shape change between the layers is remarkable and the correction by the feedback control is not appropriate. The correction unit 380 corrects the n-th layer fabrication data based on the n-th layer correction vector and the FF correction vector.

As described above, one of the correction processes by feedback control and the correction process by feed forward control is appropriately selected and executed according to the shape of the fabrication layer so that the correction process can be performed according to the shape of the three-dimensional object and change of surrounding environment.

Next, the processes executed by the fabrication apparatus 100 as described-above are summarized below. Fig. 10 is a flowchart of the processes executed by the fabrication apparatus 100. The fabrication apparatus 100 starts the process from step S1000. A value "n" is set to 0 in step S1001. The value "n" is incremented by one in step S1002.

In step S1003, the fabrication device controller 330 controls the fabrication device 206 to fabricate the n-th layer of fabrication layer. In step S1004, the process branches depending on whether all the fabrication layers have been fabricated. If all fabrication layers have been fabricated (YES), that is, if the fabrication layer fabricated in step S1003 is the top of the fabrication layers, the process proceeds to step S1009 and ends the fabrication process. If all fabrication layers have not been fabricated (NO), that is, if there is a fabrication layer that has not been fabricated, the process proceeds to step S1005.

In step S1005, the fabricated-object-shape measurement unit 340 measures the shape of the n-th layer of fabrication layer fabricated in the step S1003. In step S1006, the correction-vector output unit 370 compares the shape of the n-th layer of fabrication layer with the shape of the (n + 1)-th layer of fabrication layer, and branches the process depending on whether the difference is smaller than a threshold value. If the calculated difference is smaller than the threshold value (YES), the process proceeds to step S1007. If the calculated difference is larger than the threshold value (NO), the process proceeds to step S1008.

In step S1007, the correction-vector output unit 370 calculates a correction value of the (n + 1)-th layer by feedback control based on the data measured in the step S1005. Further, the correction unit 380 corrects the (n + 1)-th layer of fabrication data based on the calculated correction value. Then, the process returns to the step S1002, and the respective processes after the step S1002 are repeated until all the fabrication layers are fabricated.

In step S1008, the data of the correction amount stored in the storage area 373b of the correction-amount calculator 373 is cleared in order not to reflect the correction amount of the n-th layer to the (n + 1)-th layer. In the step S1008, the correction process by feed forward control may be performed by outputting the FF correction vector to the correction unit 380 from the FF-correction-vector storage unit 390 as described above. Then, the process returns to step S 1002, and the respective processes after step S1002 are repeated until all the fabrication layers are fabricated.

The fabrication apparatus 100 can perform correction corresponding to the shape of the three-dimensional object, change in the surrounding environment, and the like, by performing the process illustrated in Fig. 10 so that the fabrication apparatus 100 can fabricate a desired three-dimensional object.

Each function of the above-described embodiments of the present disclosure can be realized by a device executable program described by C, C++, C#, Java (registered trademark), etc. The program of the present embodiment is storable and distributable to the device readable recording media such as a hard disk drive (HDD), a compact disc read only memory (CD-ROM), a magneto-optic disk (MO), a digital versatile disc (DVD), a flexible disk, an electrically erasable and programmable read only memory (EEPROM), an erasable programmable read-only memory (EPROM), or can be transmitted via a network in a format readable by other devices.

### Reference Sings List

100 fabrication apparatus
110 head
120 stage
130 sensor
140 fabrication material
150 information processing terminal
201 CPU
202 RAM
203 ROM
204 storage device
205 interface
206 fabrication device
207 shape sensor
208 surrounding environment sensor
310 data input unit
320 fabrication-data generation unit
330 fabrication device controller
340 fabricated-object-shape measurement unit
350 displaced-shape prediction unit
360 surrounding-environmental-data acquiring unit
370 correction-vector output unit
371 prediction-data output delay unit
372 displacement-amount calculator
373 correction-amount calculator
373a multiplier
373b storage area
373c adder
374 correction-amount convertor
380 correction unit
390 FF-correction-vector storage unit

## Claims

1. A fabrication apparatus (100) to fabricate a three-dimensional object, the fabrication apparatus (100) comprising a controller to control an operation of a fabrication apparatus to fabricate a three-dimensional object, the controller (330) comprising:
a measurement unit (207) to measure a planar shape of a fabrication layer;
a prediction unit (350) to predict a displacement amount of a shape of the fabrication layer after a predetermined time has elapsed since fabrication of the fabrication layer by obtaining the displacement amount of the shape of the fabrication layer predicted from fabrication data based on physical properties of the fabrication material and the ambient temperature; and
a correction unit to correct fabrication data of a next fabrication layer to be fabricated next to the fabrication layer based on planar shape data of the fabrication layer measured by the measurement unit and the displacement amount predicted by the prediction unit.

2. The fabrication apparatus according to claim 1,
wherein the correction unit:
calculates a differential vector obtained by comparing the planer shape data with the displacement amount, and
calculates a correction amount of the fabrication data of the fabrication layer based on the differential vector.

3. The fabrication apparatus (100) according to claim 1 or 2, further comprising:
a displacement-amount storage unit to store a predicted displacement amount,
wherein the prediction unit (350) predicts the displacement amount in advance, and
the displacement-amount storage unit (390) outputs the predicted displacement amount at a predetermined timing.

4. The fabrication apparatus according to any one of claims 1 to 3, further comprising:
a comparison unit to compare a shape of a first fabrication layer with a shape of a second fabrication layer to be fabricated next to the first fabrication layer,
wherein the correction unit (380) clears the correction amount obtained by correcting the fabrication data of the first fabrication layer when a difference between the shape of the first fabrication layer and the shape of the second fabrication layer is larger than a predetermined threshold value as a result of comparison by the comparison unit.

5. The fabrication apparatus (100) according to claim 4,
wherein the correction unit (380) clears the correction amount obtained by correcting the fabrication data of the first fabrication layer when a correlation value between the shape of the first fabrication layer and the shape of the second fabrication layer is smaller than a predetermined threshold as the result of comparison by the comparison unit.

6. The fabrication apparatus (100) according to claim 4 or 5, further comprising:
a correction-amount storage unit (380) to store the correction amount calculated in advance,
wherein the correction unit corrects the correction amount based on the correction amount stored in the correction-amount storage unit according to the result of comparison by the comparison unit.

7. A method to fabricate a three-dimensional object, comprising:
measuring a planar shape of a fabrication layer;
predicting a displacement amount of a shape of the fabrication layer after a predetermined time has elapsed since fabrication of the fabrication layer by obtaining the displacement amount of the shape of the fabrication layer predicted from fabrication data based on physical properties of the fabrication material and the ambient temperature;
correcting fabrication data based on the planar shape of the fabrication layer measured by the measuring and the displacement amount predicted by the predicting; and
fabricating a next fabrication layer based on the corrected fabrication data.

## Patentansprüche

1. Herstellungsvorrichtung (100) zum Herstellen eines dreidimensionalen Objekts, wobei die Herstellungsvorrichtung (100) eine Steuerung zum Steuern eines Betriebs einer Herstellungsvorrichtung zum Herstellen eines dreidimensionalen Objekts umfasst, wobei die Steuerung (330) umfasst:
eine Messeinheit (207) zum Messen einer ebenen Form einer Fertigungsschicht;
eine Vorhersageeinheit (350) zum Vorhersagen eines Verschiebungsbetrages einer Form der Herstellungsschicht, nachdem eine vorbestimmte Zeit seit der Herstellung der Herstellungsschicht verstrichen ist, durch Erhalten des Verschiebungsbetrages der Form der Herstellungsschicht, der aus den Herstellungsdaten basierend auf physikalischen Eigenschaften des Herstellungsmaterials und der Umgebungstemperatur vorhergesagt wird; und
eine Korrektureinheit zum Korrigieren von Herstellungsdaten einer nächsten Herstellungsschicht, die neben der Herstellungsschicht hergestellt werden soll, auf der Grundlage von ebenen Formdaten der Herstellungsschicht, die von der Messeinheit gemessen wurden, und dem von der Vorhersageeinheit vorhergesagten Verschiebungsbetrag.

2. Herstellungsvorrichtung nach Anspruch 1,
bei der die Korrektureinheit:
berechnet einen Differentialvektor, der durch Vergleich der Hobelformdaten mit dem Verschiebungsbetrag erhalten wird, und
berechnet auf der Grundlage des Differenzvektors einen Korrekturbetrag der Fertigungsdaten der Fertigungsschicht.

3. Herstellungsvorrichtung (100) nach Anspruch 1 oder 2, ferner umfassend:
eine Verschiebungsmengen-Speichereinheit zum Speichern einer vorhergesagten Verschiebungsmenge,
wobei die Vorhersageeinheit (350) den Verschiebungsbetrag im Voraus vorhersagt,
und
die Verschiebungsbetrag-Speichereinheit (390) den vorhergesagten Verschiebungsbetrag zu einem vorbestimmten Zeitpunkt ausgibt.

4. Herstellungsvorrichtung nach einem der Ansprüche 1 bis 3, ferner umfassend:
eine Vergleichseinheit zum Vergleichen einer Form einer ersten Herstellungsschicht mit einer Form einer zweiten Herstellungsschicht, die neben der ersten Herstellungsschicht hergestellt werden soll,
wobei die Korrektureinheit (380) den Korrekturbetrag, der durch Korrigieren der Herstellungsdaten der ersten Herstellungsschicht erhalten wurde, löscht, wenn eine Differenz zwischen der Form der ersten Herstellungsschicht und der Form der zweiten Herstellungsschicht größer als ein vorbestimmter Schwellenwert als ein Ergebnis des Vergleichs durch die Vergleichseinheit ist.

5. Herstellungsvorrichtung (100) nach Anspruch 4,
bei der die Korrektureinheit (380) den Korrekturbetrag, der durch Korrigieren der Herstellungsdaten der ersten Herstellungsschicht erhalten wurde, löscht, wenn ein Korrelationswert zwischen der Form der ersten Herstellungsschicht und der Form der zweiten Herstellungsschicht kleiner als ein vorbestimmter Schwellenwert als das Ergebnis des Vergleichs durch die Vergleichseinheit ist.

6. Herstellungsvorrichtung (100) nach Anspruch 4 oder 5, ferner umfassend:
eine Korrekturbetrags-Speichereinheit (380) zum Speichern des im Voraus berechneten Korrekturbetrags,
wobei die Korrektureinheit den Korrekturbetrag auf der Grundlage des in der Speichereinheit für den Korrekturbetrag gespeicherten Korrekturbetrags entsprechend dem Ergebnis des Vergleichs durch die Vergleichseinheit korrigiert.

7. Verfahren zur Herstellung eines dreidimensionalen Objekts, umfassend:
Messen einer ebenen Form einer Fertigungsschicht;
Vorhersagen eines Verschiebungsbetrags einer Form der Herstellungsschicht, nachdem eine vorbestimmte Zeit seit der Herstellung der Herstellungsschicht verstrichen ist, indem der Verschiebungsbetrag der Form der Herstellungsschicht, der aus den Herstellungsdaten vorhergesagt wurde, auf der Grundlage der physikalischen Eigenschaften des Herstellungsmaterials und der Umgebungstemperatur ermittelt wird;
Korrigieren von Herstellungsdaten auf der Grundlage der durch die Messung gemessenen planaren Form der Herstellungsschicht und des durch die Vorhersage vorhergesagten Verschiebungsbetrags; und
Herstellen einer nächsten Fertigungsschicht auf der Grundlage der korrigierten Fertigungsdaten.

## Revendications

1. Appareil de fabrication (100) pour fabriquer un objet tridimensionnel, l'appareil de fabrication (100) comprenant un dispositif de commande pour commander un fonctionnement d'un appareil de fabrication pour fabriquer un objet tridimensionnel, le dispositif de commande (330) comprenant :
une unité de mesure (207) pour mesurer une forme plane d'une couche de fabrication ;
une unité de prédiction (350) pour prédire une quantité de déplacement d'une forme de la couche de fabrication après qu'une durée prédéterminée s'est écoulée depuis la fabrication de la couche de fabrication par obtention de la quantité de déplacement de la forme de la couche de fabrication prédite à partir des données de fabrication en fonction de propriétés physiques du matériau de fabrication et de la température ambiante ; et
une unité de correction pour corriger des données de fabrication d'une couche de fabrication suivante devant être fabriquée à côté de la couche de fabrication en fonction de données de la forme plane de la couche de fabrication mesurée par l'unité de mesure et de la quantité de déplacement prédite par l'unité de prédiction.

2. Appareil de fabrication selon la revendication 1,
dans lequel l'unité de correction :
calcule un vecteur différentiel obtenu par comparaison des données de forme plane avec la quantité de déplacement, et
calcule une quantité de correction des données de fabrication de la couche de fabrication en fonction du vecteur différentiel.

3. Appareil de fabrication (100) selon la revendication 1 ou 2, comprenant en outre :
une unité de stockage de quantité de déplacement pour stocker une quantité de déplacement prédite,
dans lequel l'unité de prédiction (350) prédit la quantité de déplacement à l'avance, et l'unité de stockage de quantité de déplacement (390) fournit en sortie la quantité de déplacement prédite à un moment prédéterminé.

4. Appareil de fabrication selon l'une quelconque des revendications 1 à 3, comprenant en outre :
une unité de comparaison pour comparer une forme d'une première couche de fabrication avec une forme d'une seconde couche de fabrication devant être fabriquée à côté de la première couche de fabrication,
dans lequel l'unité de correction (380) efface la quantité de correction obtenue par correction des données de fabrication de la première couche de fabrication lorsque une différence entre la forme de la première couche de fabrication et la forme de la seconde couche de fabrication est supérieure à une valeur seuil prédéterminée à la suite d'une comparaison par l'unité de comparaison.

5. Appareil de fabrication (100) selon la revendication 4,
dans lequel l'unité de correction (380) efface la quantité de correction obtenue par correction des données de fabrication de la première couche de fabrication lorsqu'une valeur de corrélation entre la forme de la première couche de fabrication et la forme de la seconde couche de fabrication est inférieure à une valeur seuil prédéterminée à la suite d'une comparaison par l'unité de comparaison.

6. Appareil de fabrication (100) selon la revendication 4 ou 5, comprenant en outre :
une unité de stockage de quantité de correction (380) pour stocker la quantité de correction calculée à l'avance,
dans lequel l'unité de correction corrige la quantité de correction en fonction de la quantité de correction stockée dans l'unité de stockage de quantité de correction selon le résultat de la comparaison par l'unité de comparaison.

7. Procédé de fabrication d'un objet tridimensionnel, comprenant :
la mesure d'une forme plane d'une couche de fabrication ;
la prédiction d'une quantité de déplacement d'une forme de la couche de fabrication après qu'une durée prédéterminée s'est écoulée depuis la fabrication de la couche de fabrication par obtention de la quantité de déplacement de la forme de la couche de fabrication prédite à partir de données de fabrication en fonction de propriétés physiques du matériau de fabrication et de la température ambiante ;
la correction de données de fabrication en fonction de la forme plane de la couche de fabrication mesurée par la mesure et de la quantité de déplacement prédite par la prédiction ; et la fabrication d'une couche de fabrication suivante en fonction des données de fabrication corrigées.
